(19) Europäisches Patentamt
European Patent Office
Office européen des brevets

(11) **EP 1 923 413 B1**

(12) **EUROPÄISCHE PATENTSCHRIFT**

(45) Veröffentlichungstag und Bekanntmachung des Hinweises auf die Patenterteilung:
**02.01.2013  Patentblatt 2013/01**

(51) Int Cl.:
*C08G 18/62* (2006.01)     *C08G 18/79* (2006.01)
*C08G 18/40* (2006.01)     *C08G 18/42* (2006.01)
*C08G 18/44* (2006.01)     *C09D 175/04* (2006.01)

(21) Anmeldenummer: 07021439.0

(22) Anmeldetag: **03.11.2007**

(54) **Beschichtungsmittel**

Coating agent

Agent de revêtement

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.11.2006  DE 102006053740**

(43) Veröffentlichungstag der Anmeldung:
**21.05.2008  Patentblatt 2008/21**

(73) Patentinhaber: **Bayer MaterialScience AG
51368 Leverkusen (DE)**

(72) Erfinder:
• **Wamprecht, Christian, Dr.
41472 Neuss (DE)**
• **Mechtel, Markus, Dr.
51467 Bergisch Gladbach (DE)**
• **Klimmasch, Thomas
51379 Leverkusen (DE)**

(56) Entgegenhaltungen:
**EP-A1- 1 731 582         EP-A2- 1 479 704
DE-A1-102005 009 166**

**Beschreibung**

Die vorliegende Erfindung betrifft neue Beschichtungsmittel aus Polyisocyanaten, aliphatischen Oligocarbonatpolyolen, Oligoesterpolyolen und Polyacrylatpolyolen, ein Verfahren zu Ihrer Herstellung und deren Verwendung zur Herstellung von Überzügen.

Kratzfeste Decklacke, vor allem für den Automobildecklackbereich sowie für die Autoreparaturlackierung, sind bereits seit vielen Jahren von großem Interesse. Neben der Eigenschaft, dass derartige Decklacke eine geringe Verkratzungsneigung, zum Beispiel in einer Automobilwaschstraße, aufweisen sollen, gelten ferner die Forderungen, dass auch eine ausgeprägte Lösemittel- und Säurebeständigkeit dieser Lacksysteme gegeben sein muss.

So haben sich vor allem in den letzten Jahren 2-komponentige Polyurethansysteme auf dem Markt durchgesetzt, welche sich vor allem durch gute Beständigkeiten gegen Lösemittel und Chemikalien bei gleichzeitig guter Kratzbeständigkeit und ausgezeichneter Witterungsbeständigkeit auszeichnen.

Oftmals werden Polyacrylate ggf. in Abmischung mit Polyestern als Polyolbindemittel in solchen Systemen eingesetzt. Als Vernetzer dienen hauptsächlich aliphatische und/oder cycloaliphatische Polyisocyanate auf Basis von Hexamethylendiisocyanat und/oder Isophorondiisocyanat.

Diese 2K Polyurethanbeschichtungsmittel haben ein sehr gutes Gesamteigenschaftsniveau erreicht, allerdings beobachtet man vor allem bei dunklen Farbtönen häufig eine Verkratzung des Klarlacks nach häufigen Waschgängen in Waschstraßen. Je nach Elastizitätseinstellung der Lackschicht bilden sich die Kratzer mit der Zeit zurück, man spricht vom sogenannten Reflow. Erhöht man jedoch zur Verbesserung des Reflow-Verhaltens die Elastizität der Klarlackschicht, so verliert der Lack an Oberflächenhärte und es verschlechtert sich vor allem die Lösemittel- und Chemikalienbeständigkeit, insbesondere die Säurebeständigkeit [Carl Hanser Verlag, München, MO Metalloberfläche 54 (2000) 60-64]. So gibt es im Stand der Technik Bemühungen, die Kratzfestigkeit von 2K PUR-Lacken durch Erhöhung der Elastizität der Polyolkomponente zu verbessern, hauptsächlich durch Kombinationen aus Polyacrylaten und elastischeren Polyestern.

Die DE-A 198 24 118 beschreibt lösemittelarme Bindemittel auf Polyester-Polyacrylatbasis, die mit Di- und/oder Polyisocyanaten zu schnell trocknenden Beschichtungen mit guter Haftung ausgehärtet werden können. Aufgrund des hohen Polyesteranteils weisen diese jedoch nur eine unzureichende Säurebeständigkeit auf und sind für den Einsatz in Automobildecklacken ungeeignet.

Die WO 96/20968 beschreibt ein Beschichtungsmittel für Automobile und Lastkraftwagen, das ein Polyacrylat auf Basis von alkylsubstituierten cycloaliphatischen (Meth)acrylatmonomeren oder alkylsubstituierten aromatischen Vinylmonomeren, einen multihydroxyfunktionellen Oligoester und ein Polyisocyanat enthält. Da die Oligoester allerdings herstellbedingt neben primären auch eine größere Anzahl an sekundären Hydroxylgruppen aufweisen und für niedrigviskose Beschichtungsmittel (< 3000 mPa·s / 23°C) sehr hohe Mengen dieser Ester (> 60 Gew.-% bezogen auf die Gesamtformulierung) eingesetzt werden müssen, härten diese nur sehr langsam und bei höheren Temperaturen aus, so dass sie für temperaturempfindliche Substrate, wie zum Beispiel Kunststoffanbauteile, ungeeignet sind.

Die EP-A 0 896 991 beschreibt Beschichtungsmittel auf Basis von Polyacrylat-Polyester-Mischungen mit Polyesteranteilen ≤ 10 Gew.-% und Hydroxylzahlen von 40 - 125 mg KOH/g. Aufgrund der resultierenden niedrigen Vernetzungsdichten weisen daraus hergestellte PUR-Lacke keine ausreichenden Lösemittel- und Chemikalienbeständigkeiten auf. Darüber hinaus ist die Viskosität mit 3000 - 5000 mPa·s (23°C) bei einem Festkörpergehalt von 70 Gew.-% für die Formulierung festkörperreicher PUR-Lacke zu hoch.

Im Stand der Technik, wie z. B. in der EP 1 101 780 A, der EP 819 710 A und der EP 778 298 A, wird oftmals pauschal der Einsatz von Mischungen von Polyacrylaten mit anderen Polyolen, wie z. B. Polyestern und/oder Polycarbonaten als Polyolbindemittel und Reaktionspartner für Polyisocyanatvernetzer in 2K PUR-Lacken erwähnt, ohne jedoch auf die speziellen Vorteile gerade dieser Mischungen einzugehen. Ferner werden keine Angaben über die mengenmäßige Zusammensetzung sowie das Molekulargewicht und die OH-Funktionalität des Polycarbonatpolyols solcher Mischsysteme gemacht.

In der anonymen Veröffentlichung 493099 des Research Disclosure vom Mai 2005 werden auf Seite 584 Polycarbonatdiole und ihre Kombinationsmöglichkeiten mit anderen Polyolen sowie entsprechende Polyurethanbeschichtungen beschrieben. Die erzielbaren Eigenschaften solcher Lacke, wie z. B. gute Haftung, hoher Glanz, Härteentwicklung, Verlauf, Alkalibeständigkeit, Flexibilität, Elastizität, Schlagfestigkeit und Abriebbeständigkeit, werden allgemein, ohne entsprechende Prüfergebnisse oder Nachweise genannt. Irgendwelche Angaben über eine Verbesserung der Kratzfestigkeit von entsprechenden Lacken sind jedoch nicht zu finden.

Die EP 1 479 704 A beschreibt Beschichtungsmittel auf Basis von Polyisocyanatvernetzer und Bindemitteln, die hydroxyfunktionelle Polyacrylatpolyole und Oligoesterpolyole mit einem zahlenmittleren Molekulargewicht von 119 bis 2000 g/mol enthalten. Die Bindemittel enthalten aber keine Oligocarbonatpolyole.

Aufgabe der vorliegenden Erfindung war es daher, neue Beschichtungsmittel zur Verfügung zu stellen, die eine deutliche Verbesserung der Kratzfestigkeit aufweisen, ohne dabei die Säure- und Lösemittelbeständigkeit der Decklacksysteme negativ zu beeinflussen.

Es wurde überraschenderweise gefunden, dass durch Verwendung von speziellen Kombinationen aus aliphatischen Oligocarbonatpolyolen, Oligoesterpolyolen bestimmten Polyacrylatpolyolen und als Vernetzer bzw. Härter dienenden Polyisocyanaten, Beschichtungsmittel hergestellt werden können, die eine deutlich verbesserte Kratzbeständigkeit aufweisen, bei gleich guter bzw. auch verbesserter Lösemittel- und Säurebeständigkeit.

Gegenstand der Erfindung sind daher Beschichtungsmittel, enthaltend

A) eine Polyolkomponente, die aus

a) 5 bis 40 Gew.-% an aliphatischen Oligocarbonatpolyolen mit einem zahlenmittleren Molekulargewicht $M_n$ von 200 bis 5.000 g/mol

b) 20 bis 60 Gew.-% an Oligoesterpolyolen mit einem zahlenmittleren Molekulargewicht von 200 bis 5.000 g/mol und

c) 20 bis 70 Gew.% an hydroxyfunktionellen Polyacrylatpolyolen

besteht und

B) ein oder mehrere gegenüber OH-Gruppen reaktive Polyisocyanatvernetzer mit einer mittleren NCO-Funktionalität von $\geq$ 2,0.

Die Mengen von a) bis c) zusammen addieren sich dabei zu 100 Gew.-%.
Bevorzugt werden in A) aliphatische Oligocarbonatpolyole eingesetzt, die ein zahlenmittleres Molekulargewicht von 200 bis 3.000 g/mol, besonders bevorzugt 200 bis 2.000 g/mol und ganz besonders bevorzugt 300 bis 1.500 g/mol aufweisen.
Bevorzugt werden in a) aliphatische Oligocarbonatpolyole der vorstehend genannten Art eingesetzt, die eine OH-Funktionalität von 1,5 bis 5, besonders bevorzugt 1,7 bis 4, ganz besonders bevorzugt 1,9 bis 3 haben.
Bevorzugt beträgt die Menge der Komponente a) 10 bis 35 Gew.%, , besonders bevorzugt wird a) in Mengen von 15 bis 30 Gew.-% und ganz besonders bevorzugt wird a) in Mengen von 15 bis 25 Gew.-% eingesetzt.
Die Herstellung der in a) eingesetzten aliphatischen Oligocarbonatpolyolen kann durch Umesterung von monomeren Dialkylcarbonaten wie Dimethylcarbonat, Diethylcarbonat etc. mit Polyolen mit einer OH-Funktionalität $\geq$ 2,0 wie 1,4-Butandiol, 1,3-Butandiol, 1,5 Pentandiol, 1,6-Hexandiol, 3-Methyl-1,5-Pentandiol, 1,12-Dodecandiol, Cyclohexan-1,4-dimethanol, 3(4),8(9)-Bis-(hydroxymethyl)-tricyclodecan, Trimethylolpropan, Glycerin etc. erfolgen und ist beispielhaft in EP-A 1 404 740 B1 Bsp. 1 bis 5, EP-A 1 477 508 A1, Bsp. 3 beschrieben.
Für die erfindungsgemäßen Beschichtungsmittel werden bevorzugt aliphatische Oligocarbonatpolyole und besonders bevorzugt aliphatische Oligocarbonatpolyole mit einem Molekulargewicht von 200 bis 2.000 g/mol basierend auf 1,4-Butandiol, 1-6-Hexandiol, 3-Methyl-1,5-Pentandiol, Cyclohexan-1,4-dimethanol, Trimethylolpropan, Glycerin oder deren Mischungen eingesetzt.
Bevorzugt werden in b) aliphatische Oligoesterpolyole eingesetzt, die ein zahlenmittleres Molekulargewicht von 200 bis 3.000 g/mol, besonders bevorzugt 200 bis 2.000 g/mol und ganz besonders bevorzugt 300 bis 1.500 g/mol aufweisen.
Bevorzugt werden in b) aliphatische Oligoesterpolyole der vorstehend genannten Art eingesetzt, die eine OH-Funktionalität von 1,5 bis 6, besonders bevorzugt 2 bis 4, ganz besonders bevorzugt 2 bis 3 haben.
Bevorzugt beträgt die Menge der Komponente b) 25 bis 55 Gew.%, , besonders bevorzugt wird b) in Mengen von 30 bis 50 Gew.-% und ganz besonders bevorzugt wird b) in Mengen von 35 bis 45 Gew.-% eingesetzt.
Die Herstellung der in b) eingesetzten aliphatischen Oligoesterpolyole kann durch Umsetzung von cyclischen Lactonen wie $\varepsilon$-Caprolacton oder $\gamma$-Butyrolacton, mit Polyolen mit einer OH-Funktionalität $\geq$ 2,0 wie 1,2-Ethandiol, 1,2-Propandiol, 1,3-Propandiol, Diethylenglykol, 1,4-Butandiol, 1,3-Butandiol, 1,5-Pentandiol, 1,6-Hexandiol, 3-Methyl-1,5-pentandiol, 1,12-Dodecandiol, Cyclohexan-1,4-dimethanol, 3(4),8(9)-Bis-(hydroxymethyl)-tricyclodecan, Trimethylolpropan, Glycerin, Pentaerythrit, Sorbit etc. erfolgen und ist beispielhaft in EP-A 1 404 740 B1 Bsp. 1 bis 5, EP-A 1 477 508 A1, Bsp. 3 beschrieben.
Für die erfindungsgemäßen Beschichtungsmittel werden bevorzugt aliphatische Oligoesterpolyole und besonders bevorzugt aliphatische Oligoesterpolyole mit einem Molekulargewicht von 200 bis 2.000 g/mol basierend auf 1,4-Butandiol, 3-Methyl-1,5-pentandiol, 1,6-Hexandiol, Cyclohexan-1,4-dimethanol, Trimethylolpropan, Glycerin, Pentaerythrit oder deren Mischungen eingesetzt.
Bevorzugt werden in c) Polyacrylatpolyole eingesetzt, die ein gewichtsmittleres Molekulargewicht von 1.500 bis 50.000 g/mol, besonders bevorzugt 2.000 bis 30.000 g/mol und ganz besonders bevorzugt 2.000 bis 20.000 g/mol sowie einen Hydroxylgruppengehalt von 1,0 bis 10,0%, vorzugsweise 1,5 bis 8,0% und besonders bevorzugt 2,0 bis 6,0% aufweisen.

Bevorzugt beträgt die Menge der Komponente c) 25 bis 65 Gew.-%,, besonders bevorzugt wird c) in Mengen von 30 bis 55 Gew.-% und ganz besonders bevorzugt wird c) in Mengen von 35 bis 45 Gew.-% eingesetzt.

Die eingesetzten Polyacrylatpolyole c) sind erhältlich, indem nach dem Fachmann bekannten Methoden

c1) 0 bis 10 Gew.-% eines oder mehrerer gegebenenfalls funktioneller Polybutadiene mit einem zahlenmittleren Molekulargewicht von 500 bis 10.000 g/mol und mit einem Anteil an 1,2-seitenständigen vinylischen Doppelbindungen von mindestens 10 Mol.-%, bezogen auf alle enthaltenen vinylischen Doppelbindungen des Polybutadiens,

c2) 1 bis 30 Gew.-% eines oder mehrerer ungesättigter, aromatischer Monomere ausgewählt aus der Gruppe Styrol, $\alpha$-Methylstyrol und Vinyltoluol,

c3) 20 bis 80 Gew.-% eines oder mehrerer Hydroxyalkylester der Acryl- oder Methacrylsäure die primäre Hydroxylgruppen enthalten,

c4) 0 bis 30 Gew.-% eines oder mehrerer cycloaliphatischer Ester aus Acryl- oder Methacrylsäure und $C_3$ bis $C_{12}$ Monoalkoholen,

c5) 10 bis 60 Gew.-% eines oder mehrerer aliphatischer Ester aus Acryl- oder Methacrylsäure und $C_1$ bis $C_8$ Monoalkoholen,

c6) 0 bis 5 Gew.-% einer oder mehrerer $\alpha,\beta$-ungesättigter $C_3$ - $C_7$ Mono- oder Dicarbonsäuren oder eines oder mehrerer Halbester der Maleinsäure- oder Fumarsäure und $C_1$ bis $C_{14}$ Monoalkoholen und

c7) 0 bis 30 Gew.-% weiterer von den Verbindungen der Komponenten b1) bis b6) verschiedener copolymerisierbarer Verbindungen,

miteinander copolymerisiert werden und wobei die Summe der Gew.-% der Komponenten c1) bis c7) 100 Gew.-% beträgt.

Bevorzugt bestehen die Copolymerisate der Komponente c) aus

c1) 0,1 bis 8 Gew.-% eines oder mehrerer, gegebenenfalls funktioneller, Polybutadiene mit einem zahlenmittleren Molekulargewicht von 600 bis 5.000 g/mol und mit einem Anteil an 1,2-seitenständigen vinylischen Doppelbindungen von mindestens 20 Mol-%, bezogen auf alle enthaltenen vinylischen Doppelbindungen des Polybutadiens,

c2) 2 bis 28 Gew.-% Styrol,

c3) 25 bis 70 Gew.-% einer oder mehrerer Verbindungen der Gruppe bestehend aus Hydroxyethylacrylat, Hydroxyethylmethacrylat und Butandiol-1,4-monoacrylat,

c4) 0 bis 25 Gew.-% einer oder mehrerer cycloaliphatischer Ester aus Acryl- oder Methacrylsäure und $C_3$ bis $C_{12}$ Monoalkoholen,

c5) 15 bis 60 Gew.-% einer oder mehrerer Ester aus Acryl- oder Methacrylsäure und aliphatischen $C_1$ bis $C_8$ Monoalkoholen,

c6) 0 bis 4 Gew.-% einer oder mehrerer Verbindungen der Gruppe bestehend aus Acrylsäure, Methacrylsäure, Maleinsäurehalbestern und Fumarsäurehalbestern aus den entsprechenden Säuren und $C_1$ bis $C_8$ Monoalkoholen und

c7) 0-25 Gew.-% einer oder mehrerer Verbindungen der Gruppe bestehend aus Acrylnitril, Methacrylnitril, Hydroxypropyl(meth)acrylat, Vinylester aliphatischer, gegebenenfalls verzweigter $C_1$ - $C_{10}$ Monocarbonsäuren, Dialkyl- oder Dicycloalkylester aus Malein- oder Fumarsäure und $C_3$ bis $C_8$ Monoalkoholen,

wobei die Summe der Gew.-% der Komponenten c1) bis c7) 100 Gew.-% beträgt.

Besonders bevorzugt bestehen die Copolymerisate der Komponente c) aus

c1) 0,2 bis 6,0 Gew.-% eines oder mehrerer, gegebenenfalls funktioneller, Polybutadiene mit einem zahlenmittleren Molekulargewicht von 700 bis 4.000 g/mol und mit einem Anteil an 1,2-seitenständigen vinylischen Doppelbindungen von mindestens 30 Mol-%, bezogen auf alle enthaltenen vinylischen Doppelbindungen des Polybutadiens,

c2) 5 bis 25 Gew.-% Styrol,

c3) 30 bis 65 Gew.% Hydroxyethylacrylat, Hydroxyethylmethacrylat oder deren Mischungen,

c4) 0 bis 20 Gew.-% einer oder mehrerer Verbindungen der Gruppe bestehend aus Isobornylacrylat, Isobornylmethacrylat, Cyclohexyl(meth)acrylat, 3,5,5-Trimethylcyclohexyl(meth)-acrylat, 4-tert.-Butylcyclohexyl(meth)acrylat,

c5) 20 bis 50 Gew.-% eines oder mehrerer Ester aus Acryl- oder Methacrylsäure und aliphatischen $C_1$ bis $C_8$ Monoalkoholen,

c6) 0,1 bis 3 Gew.-% Acrylsäure, Methacrylsäure oder deren Mischungen,

c7) 0 bis 20 Gew.-% einer oder mehrerer Verbindungen der Gruppe bestehend aus Acrylnitril, Methacrylnitril, Hydroxypropyl(meth)acrylat, Vinylester aliphatischer, gegebenenfalls verzweigter $C_1$ - $C_{10}$ Monocarbonsäuren und Dialkyl- oder Dicycloalkylester aus Malein- oder Fumarsäure und $C_3$ bis $C_8$ Monoalkoholen,

wobei die Summe der Gew.-% der Komponenten c1) bis c7) 100 Gew.-% beträgt.

Ganz besonders bevorzugt bestehen die Copolymerisate der Komponente c) aus

c1) 0,4 bis 5 Gew.-% eines oder mehrerer, gegebenenfalls funktioneller, Polybutadiene mit einem zahlenmittleren Molekulargewicht von 750 bis 3.500 g/mol und mit einem Anteil an 1,2-seitenständigen vinylischen Doppelbindungen von mindestens 40 Mol.%, bezogen auf alle enthaltenen vinylischen Doppelbindungen des Polybutadiens,

c2) 5 bis 20 Gew.-% Styrol,

c3) 30 bis 60 Gew.-% Hydroxyethylacrylat, Hydroxyethylmethacrylat oder deren Mischungen,

c4) 0 bis 15 Gew.-% einer oder mehrerer Verbindungen der Gruppe bestehend aus Isobornylacrylat, Isobornylmethacrylat, Cyclohexyl(meth)acrylat, 3,5,5-Trimethylcyclohexyl(meth)-acrylat und 4-tert.-Butylcyclohexyl(meth)acrylat,

c5) 25 bis 45 Gew.-% eines oder mehrerer Esters aus Acryl- oder Methacrylsäure und aliphatischen $C_1$ bis $C_4$ Monoalkoholen,

c6) 0,3 bis 2 Gew.-% Acrylsäure, Methacrylsäure oder deren Mischungen und

c7) 0 bis 15 Gew.% einer oder mehrerer der Verbindungen der Gruppe bestehend aus Hydroxypropyl(meth)acrylat, Vinylester aliphatischer, gegebenenfalls verzweigter $C_1$ bis $C_9$ Monocarbonsäuren, Dialkyl- oder Di(cyclo)alkylester aus Malein- oder Fumarsäure und $C_3$ bis $C_6$ Monoalkoholen,

wobei die Summe der Gew.-% der Komponenten c1) bis c7) 100 Gew.-% beträgt.

Die Herstellung der Harze der Komponente c) wird durch Copolymerisation der Bestandteile c1) bis c7) nach üblichen, dem Fachmann vertrauten Methoden durchgeführt [Houben-Weyl (Hrsg.): Methods of Organic Chemistry, 4 th ed., E 20/2. Thieme, Stuttgart 1987, S. 1156], wobei eine radikalische Lösungspolymerisation der Komponenten c1) bis c7) bei Temperaturen von 80 bis 240 °C in Gegenwart von Radikalbildnern bevorzugt ist.

Die Monomeren bzw. Oligomeren c1) bis c7) werden im Allgemeinen in den gleichen Verhältnissen, wie sie zur Polymerisation eingesetzt werden, in das Copolymerisat eingebaut. Die eingebauten Einheiten sind im Wesentlichen statistisch verteilt.

Als Ausgangsmaterialien c1) für die erfindungswesentlichen Copolymerisate c) sind grundsätzlich alle Polybutadiene mit einem zahlenmittleren Molekulargewicht von 500 - 10.000 g/mol geeignet, die einen Anteil an vinylischen Doppelbindungen in seitenständiger 1,2-Position von mindestens 10 Mol.-%, bevorzugt mindestens 20 Mol.-%, besonders bevorzugt mindestens 40 Mol.-%, bezogen auf alle in dem Polybutadien enthaltenen Vinyldoppelbindungen, besitzen.

Typischerweise werden als Verbindungen der Komponente c1) Polybutadien-Isomerengemische eingesetzt, deren vinylische Doppelbindungen zu 10 bis 90 Mol.-% in 1,2-Stellung sind, zu 10 bis 70 Mol.-% in 1,4-cis und/oder 1,4-trans-Stellung sind und zu 0 bis 30 Mol.-% in cyclischen Strukturen vorliegen.

Die eingesetzten Polybutadiene können gegebenenfalls auch funktionelle Gruppen, wie beispielsweise Hydroxylgruppen oder Carboxylgruppen, tragen.

Eine Übersicht geeigneter Polybutadiene der vorstehend genannten Art ist in "Makromoleküle" von H. G. Elias, 4. Auflage, Hüthig und Wepf-Verlag, Basel, Heidelberg, New York, Seiten 676 sowie 744 bis 746 und 1012 ff. gegeben.

Die Herstellung der Copolymerisate c) kann in Gegenwart eines Lösungsmittels durchgeführt werden. Hierfür eignen sich beispielsweise aliphatische, cycloaliphatische und/oder aromatische Kohlenwasserstoffe, wie Alkylbenzole, z. B. Toluol, Xylol; Ester, wie Ethylacetat, n-Propylacetat, Isopropylacetat, n-Butylacetat, n-Hexylacetat, 2-Ethylhexylacetat, Ethylpropionat, Butylpropionat, Pentylpropionat, Ethylenglykolmonoethyletheracetat, das entsprechende Methyletheracetat; Methoxypropylacetat, Ether wie Ethylenglykolacetatmonomethyl-, -ethyl- oder -butylether; Ketone wie Aceton, Methylethylketon, Methylisobutylketon, Methyl-n-amylketon oder Gemische derartiger Lösemittel.

Die Herstellung der Copolymerisate c) kann kontinuierlich oder diskontinuierlich erfolgen.

Bei kontinuierlicher Herstellung wird in einen Polymerisationsreaktor gleichmäßig und kontinuierlich die Monomermischung und der Initiator eindosiert und gleichzeitig die entsprechende Menge Polymerisat kontinuierlich abgeführt, so dass sehr einheitliche Copolymere erhalten werden.

Bei einer diskontinuierlichen Herstellung werden Monomermischung und Initiator in den Polymerisationsreaktor eindosiert, wobei das Polymerisat im Reaktor verbleibt. Um möglichst einheitlich aufgebaute Copolymere zu erhalten, werden Monomermischung und Initiator mit konstanter Geschwindigkeit in den Reaktor eindosiert.

Unter einheitlichen Copolymeren im Sinne der Erfindung werden Copolymerisate mit enger Molekulargewichtsverteilung und einer geringen Uneinheitlichkeit von bevorzugt $U \leq 2,5$ sowie nahezu gleicher Monomerzusammensetzung der Molekülketten verstanden.

Im Allgemeinen erfolgt die Copolymerisation im Temperaturbereich von 80 bis 240 °C, vorzugsweise 100 bis 220 °C und besonders bevorzugt 120 bis 200 °C.

Die Copolymerisation kann dabei unter einem Druck von bis zu 15 bar durchgeführt werden.

Die Initiatoren werden in Mengen von 0,05 bis 15 Gew.%, vorzugsweise 1 bis 10 Gew.%, insbesondere 2 bis 8 Gew.-%, bezogen auf die Gesamtmenge der Komponenten c1) bis c7), eingesetzt.

Geeignete Initiatoren zur Herstellung der Copolymerisate c) sind übliche Radikalstarter auf Azo- oder Peroxidbasis, jedoch nur solche, die in dem oben genannten Temperaturbereich eine für die Polymerisation genügend lange Halbwertszeit von ca. 5 Sekunden bis ca. 30 Minuten besitzen. Geeignet sind beispielsweise 2,2'-Azobis-(2-methylpropannitril), 2,2'-Azobis-(2-methylbutannitril), 1,1'-Azobis(cyclohexan-carbonitril), tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,5,5-trimethylhexanoat, tert.-Butyl-peroxyisopropylcarbonat, tert.-Butylperoxyacetat, tert.-Butylperoxybenzoat, Dicumylperoxid, tert.-Butylcumylperoxid, Di-tert.-butylperoxid und Di-tert.-amylperoxid.

In einer besonderen Ausführungsform werden die Polyacrylatpolyole c) in Gegenwart mindestens eines der Oligocarbonatpolyole a) und/oder Oligoesterpolyole b) nach den oben beschriebenen Verfahren hergestellt. Dabei kann die Polymerisation sowohl in Abwesenheit von organischen Lösemittel erfolgen, wobei das Oligocarbonatpolyol und/oder das Oligoesterpolyol das Reaktionsmedium für die radikalische Polymerisation darstellt, als auch in Mischungen aus organischen Lösemitteln und Oligocarbonatpolyolen a) und/oder Oligoesterpolyolen b).

Bei den gegenüber OH-Gruppen reaktiven Polyisocyanatvernetzern B) handelt es sich um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den Schriften DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen.

Ganz besonders bevorzugt sind Polyisocyanate bzw. Polyisocyanatgemische mit Isocyanuratstruktur auf Basis von HDI, IPDI und/oder 4,4'-Diisocyanatodicyclohexylmethan.

Ferner ist es ebenso möglich, so genannte blockierte Polyisocyanate und/oder Isocyanate, bevorzugt blockierte Polyisocyanate bzw. Polyisocyanatgemische, ganz besonders bevorzugt blockierte Polyisocyanate bzw. Polyisocyanatgemische mit Isocyanuratstruktur auf Basis von HDI, IPDI und/oder 4,4'-Diisocyanatodicyclohexylmethan einzusetzen.

Die Blockierung von (Poly)Isocyanaten zum zeitweisen Schutz der Isocyanatgruppen ist eine seit langem bekannte Arbeitsmethode und wird z.B. in Houben Weyl, Methoden der organischen Chemie XIV/2, S. 61-70 beschrieben.

Als Blockierungsmittel kommen alle Verbindungen in Betracht, die bei Erhitzen des blockierten (Poly)Isocyanats, ggf. unter Anwesenheit eines Katalysators, abgespalten werden können. Geeignete Blockierungsmittel sind z.B. sterisch anspruchsvolle Amine wie Dicyclohexylamin, Diisopropylamin, N-tert.-Butyl-N-benzylamin, Caprolactam, Butanonoxim, Imidazole mit den verschiedenen denkbaren Substitutionsmustern, Pyrazole, wie 3,5-Dimethylpyrazol, Triazole und Tetrazole, ebenso Alkohole wie Isopropanol, Ethanol, tert.-Butanol. Daneben besteht auch die Möglichkeit, die Isocyanatgruppe so zu blockieren, dass bei einer Weiterreaktion nicht das Blockierungsmittel abgespalten wird, sondern die intermediär gebildete Zwischenstufe abreagiert. Dies ist insbesondere beim Cyclopentanon-2-carboxyethylester der Fall, der bei der thermischen Vernetzungsreaktion vollständig in das polymere Netzwerk einreagiert und nicht wieder abgespalten wird.

Besonders bei der Verwendung blockierter Polyisocyanate können ebenfalls weitere, reaktive Verbindungen, welche gegenüber OH oder NH-Gruppen reaktive Gruppen aufweisen, als zusätzliche Vernetzerkomponenten neben Komponente B) eingesetzt werden. Beispielsweise sind dies Aminoplastharze.

Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten MelaminFormaldehyd-Kondensate. Im Falle der Mitverwendung anderer Vernetzerkomponenten muss die Menge an Bindemittel mit NCO-reaktiven Hydroxylgruppen entsprechend angepasst werden.

Als Katalysatoren für die Reaktion der Komponenten A) mit der Komponente B) zur Herstellung der erfindungsgemäßen Beschichtungsmittel können Katalysatoren, wie handelsübliche Organometallverbindungen der Elemente Aluminium, Zinn, Zink, Titan, Mangan, Eisen, Bismut oder auch Zirkonium wie Dibutylzinnlaurat, Zinkoctoat, Titantetraisopropylat, verwendet werden. Darüber hinaus eignen sich aber auch tertiäre Amine, wie z.B. 1,4-Diazabicyclo-[2.2.2]-octan.

Ferner ist es möglich, die Umsetzung der Komponente B) mit Komponente A) zu beschleunigen, in dem die Aushärtung bei Temperaturen zwischen 20 und 200 °C bevorzugt zwischen 60 und 180 °C, besonders bevorzugt zwischen 70 und 150 °C durchgeführt wird.

Neben der erfindungswesentlichen Polyolmischung A) können auch weitere dem Fachmann aus der Polyurethanlacktechnologie bekannte, organische Polyhydroxylverbindungen oder aminischen Reaktivverdünner eingesetzt werden.

Bei diesen anderen Polyhydroxylverbindungen kann es sich um die üblichen Polyether-, Polyurethan- oder um weitere, bisher nicht beschriebene Polycarbonat-, Polyester-, und Polyacrylatpolyole handeln. Vorzugsweise werden als weitere organische Polyhydroxylverbindungen, falls solche überhaupt neben der erfindungswesentlichen Polyolkomponente A) zum Einsatz gelangen, die an sich bekannten Polyacrylatpolyole und/oder Polyesterpolyole des Standes der Technik eingesetzt. Bei den aminischen Reaktivverdünnern kann es sich um Produkte mit blockierten Aminogruppen, wie Aldimine oder Ketimine , oder um solche, die noch freie, jedoch in ihrer Reaktivität abgeschwächte Aminogruppen aufweisen, wie Asparaginsäureester, handeln. In aller Regel weisen die aminischen Reaktivverdünner mehr als eine (blockierte) Aminogruppe auf, sodass sie bei der Vernetzungsreaktion zum Aufbau des polymeren Lackfilmnetzwerkes beitragen.

Falls neben der erfindungsgemäßen Polyolkomponente A) weitere Polyhydroxylverbindungen oder aminische Reaktivverdünner der vorstehend genannten Art eingesetzt werden, beträgt der Anteil dieser zusätzlichen gegenüber Isocyanaten reaktiven Verbindungen maximal 50 Gew.-%, vorzugsweise maximal 30 Gew.%, bezogen auf die Menge der erfindungswesentlichen Komponente A). Besonders bevorzugt wird jedoch die erfindungswesentliche Polyolkomponente A) als alleinige Polyolkomponente in den erfindungsgemäßen Beschichtungsmitteln eingesetzt.

Das Verhältnis von Komponente B) zu Komponente A) und ggf. weiteren Vernetzern und Härtern wird dabei so bemessen, dass ein NCO/OH-Verhältnis der freien und gegebenenfalls blockierten NCO-Gruppen zu den isocyanatreaktiven Gruppen von 0,3 bis 2, bevorzugt 0,4 bis 1,5 besonders bevorzugt 0,5 bis 1,2 resultiert.

In den erfindungswesentlichen Beschichtungsmitteln können zusätzlich zu den erfindungswesentlichen Komponenten A) und B) auch in der Beschichtungstechnologie übliche Hilfsstoffe, wie anorganische oder organische Pigmente, weitere organische Lichtschutzmittel, Radikalfänger, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und weitere Katalysatoren mit verwendet werden.

Die erfindungsgemäßen Beschichtungsmittel kommen vorzugsweise in den Bereichen Autoerstlackierung, Kunststofflackierung, allgemeine Industrielackierung, Großfahrzeuglackierung, Autoreparaturlackierung, Bodenbeschichtung und/oder Holz-/Möbellackierung zur Anwendung.

Gegenstand der Erfindung sind daher auch Beschichtungen und beschichtete Substrate, die unter Einsatz der erfindungsgemäßen Beschichtungsmittel erhältlich sind.

**Beispiele:**

Desmophen® A 870: Hydroxylgruppenhaltiges Polyacrylat der Firma Bayer MaterialScience AG, Leverkusen, DE; ca. 70%ig in Butylacetat, Hydroxylgehalt nach DIN 53 240/2 ca. 2,95 %.

Desmophen® VP LS 2971: Elastifizierender, hydroxylgruppenhaltiger Polyester der Firma Bayer MaterialScience AG, Leverkusen, DE; ca. 80%ig in Butylacetat, Hydroxylgehalt nach DIN 53 240/2 ca. 3,8 %.

Desmodur® N 3600: Aliphatisches Polyisocyanurat der Firma Bayer MaterialScience AG, Leverkusen, DE; 100 Gew.-%ig, mit einem NCO-Gehalt nach DIN EN ISO 11909 von 23 Gew.-%

Desmodur® N 3390 BA: Aliphatisches Polyisocyanurat der Firma Bayer MaterialScience AG, Leverkusen, DE; 90 Gew.-%ig in n-Butylacetat mit einem NCO-Gehalt nach DIN EN ISO 11909 von 19,6 Gew.-%

Die Bestimmung der Hydroxylzahl (OH-Zahl) erfolgte gemäß DIN 53240-2

Die Viskositätsbestimmung erfolgte mittels Rotationsviskosimeter "MCR 51" der Fa. Paar, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

**Beispiel 1: Oligocarbonatdiol a1**

Herstellung eines aliphatischen Oligocarbonatdiols auf Basis 1,6-Hexandiol / 1,4-Butandiol mit einem zahlenmittleren Molekulargewicht von 2.000 g/mol.

In einem 6 l Druckreaktor mit Destillationsaufsatz, Rührer und Vorlage wurden 1390 g 1,4-Butandiol, 608 g 1,6-Hexandiol mit 0,7 g Yttrium(III)acetylacetonat sowie 914 g Dimethylcarbonat bei 80 °C vorgelegt. Anschließend wurde unter Stickstoffatmosphäre das Reaktionsgemisch in 2 h auf 150 °C aufgeheizt und dort unter Rühren und Rückfluss 2 h gehalten wobei der Druck auf 3,9 bar (absolut) anstieg. Danach wurden das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 914 g Dimethylcarbonat bei 150 °C zu dem Reaktionsgemisch dosiert und dort unter Rühren und Rückfluss 2 h gehalten, wobei der Druck auf 3,9 bar (absolut) anstieg. Danach wurde erneut das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 782 g Dimethylcarbonat bei 150 °C zu dem Reaktionsgemisch dosiert und dort unter Rühren und Rückfluss 2 h gehalten, wobei der Druck auf 3,5 bar (absolut) anstieg. Danach wurde erneut das Spaltprodukt Methanol im Gemisch mit Dimethylcarbonat per Destillation entfernt, wobei der Druck innerhalb von 4 h auf Normaldruck gesenkt wurde. Im Anschluss daran wurde das Reaktionsgemisch innerhalb von 2 h auf 180 °C erhitzt und bei dieser Temperatur 2 h unter Rühren gehalten. Daran anschließend wurde die Temperatur auf 130 °C reduziert und ein Stickstoffstrom (5 1/h) durch das Reaktionsgemisch hindurchgeleitet, während der Druck auf 20 mbar abgesenkt wurde. Danach wurde die Temperatur binnen 4 h auf 180 °C erhöht und dort 6 h gehalten. Dabei erfolgte die weitere Entfernung von Methanol im Gemisch mit Dimethylcarbonat aus dem Reaktionsgemisch.

Nach Belüftung und Abkühlung des Reaktionsansatzes auf Raumtemperatur, wurde ein farbloses, wachsartiges Oligocarbonatdiol mit folgenden Kennzahlen erhalten:

$$M_n = 1.968 \text{ g/mol}; \text{OH-Zahl} = 57 \text{ mg KOH/g}; \text{Viskosität}: 3.513 \text{ mPa·s bei } 75 \text{ °C, Hazen-Farbzahl}:$$

$$47 \text{ APHA}.$$

**Beispiel 2: Oligocarbonatdiol a2**

Herstellung eines aliphatischen Oligocarbonatdiols auf Basis 3-Methyl-1,5-pentandiol mit einem zahlenmittleren Molekulargewicht von 650 g/mol.

Vorgehen wie in Beispiel 1, wobei anstatt 1,6-Hexandiol 34.092 g 3-Methyl-1,5-pentandiol und 8,0 g Ytterbium (III)acetylacetonat in einem 60 1 Druckreaktor vorgelegt wurden und Dimethylcarbonat in drei Schritten zu je zweimal 10.223 g und einmal 7.147 g zugegeben wurden.

Man erhielt ein farbloses, flüssiges Oligocarbonatdiol mit folgenden Kennzahlen: $M_n$ = 675 g/mol; OH-Zahl = 166,0 mg KOH/g; Viskosität: 4.146 mPa·s bei 23 °C, Hazen-Farbzahl: 17 APHA.

**Beispiel 3: Oligocarbonatdiol a3**

Herstellung eines aliphatischen Oligocarbonatdiols auf Basis Polytetrahydrofuran 250 (Molgewicht 250 g/mol) mit einem zahlenmittleren Molekulargewicht von 1.000 g/mol.

Vorgehen wie in Beispiel 1, wobei anstatt 1,6-Hexandiol 3.259 g Polytetrahydrofuran 250, 0,7 g Yttrium(III) acetylacetonat in einem 6 l Druckreaktor vorgelegt und Dimethylcarbonat in drei Schritten zu je zweimal 439 g und einmal 376 g zugegeben wurden.

Man erhielt ein farbloses, flüssiges Oligocarbonatdiol mit folgenden Kennzahlen: $M_n$ = 1.002 g/mol; OH-Zahl = 112 mg KOH/g; Viskosität: 1.360 mPa·s bei 23 °C, Hazen-Farbzahl: 13 APHA.

**Beispiel 4: Oligocarbonatdiol a4**

Herstellung eines aliphatischen Oligocarbonatdiols auf Basis Cyclohexandimethanol und 1,4-Butandiol mit einem zahlenmittleren Molekulargewicht von 500 g/mol.

Vorgehen wie in Beispiel 1, wobei anstatt 1,6-Hexandiol 2.119 g Cyclohexan-1,4-dimethanol, 1.325 g 1,4-Butandiol und 0,8 g Yttrium(III)acetylacetonat in einem 6 l Druckreaktor vorgelegt und Dimethylcarbonat in drei Schritten zu je zweimal 1.012 g und einmal 867 g zugegeben wurde.

Man erhielt ein farbloses, flüssiges Oligocarbonatdiol mit folgenden Kennzahlen: $M_n$ = 492 g/mol; OH-Zahl = 228 mg KOH/g; Viskosität: 87.700 mPa·s bei 23 °C, Hazen-Farbzahl: 35 APHA.

**Beispiel 5: Oligoesterpolyol b1**

Herstellung eines aliphatischen Oligoesterpolyols auf Basis von Trimethylolpropan

In einen Reaktor gemäß Beispiel 1 wurden 3.155 g Trimethylolpropan, 1.345 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,5 Gew.-%, Viskosität bei 23 °C: 4.100 mPa·s, Säurezahl: 0,5 mg KOH/g, Hydroxylzahl: 881 mg KOH/g, Hydroxylgehalt: 26,7 Gew.-%, Hazen-Farbzahl: 44 APHA.

**Beispiel 6: Oligoesterpolyol b2**

Herstellung eines aliphatischen Oligoesters auf Basis von Trimethylolpropan

In einen Reaktor gemäß Beispiel 1 wurden 2.747 g Trimethylolpropan, 1.753 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,5 Gew.-%, Viskosität bei 23 °C: 3.300 mPa·s, Säurezahl: 1,0 mg KOH/g, Hydroxylzahl: 766 mg KOH/g, Hydroxylgehalt: 23,2 Gew.-%, Hazen-Farbzahl: 72 APHA.

**Beispiel 7: Oligoesterpolyol b3**

Herstellung eines aliphatischen Oligoesters auf Basis von Trimethylolpropan

In einen Reaktor gemäß Beispiel 1 wurden 1.977 g Trimethylolpropan, 2.523 g s-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,6 Gew.-%, Viskosität bei 23 °C: 2.080 mPa·s, Säurezahl: 0,6 mg KOH/g, Hydroxylzahl: 542 mg KOH/g, Hydroxylgehalt: 16,4 Gew.-%, Hazen-Farbzahl: 48 APHA.

**Beispiel 8: Oligoesterpolyol b4**

Herstellung eines aliphatischen Oligoesters auf Basis von Trimethylolpropan

In einen Reaktor gemäß Beispiel 1 wurden 1.407 g Trimethylolpropan, 3.593 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 100,0 Gew.%, Viskosität bei 23 °C: 1.730 mPa·s, Säurezahl: 0,5 mg KOH/g, Hydroxylzahl: 356 mg KOH/g, Hydroxylgehalt:

10,8 Gew.%, Hazen-Farbzahl: 17 APHA.

**Beispiel 9: Oligoesterpolyol b5**

Herstellung eines aliphatischen Oligoesters auf Basis von Trimethylolpropan

In einen Reaktor gemäß Beispiel 1 wurden 737 g Trimethylolpropan, 3.763 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,8 Gew.-%, Viskosität bei 23 °C: 1.750 mPa·s, Säurezahl: 0,9 mg KOH/g, Hydroxylzahl: 202 mg KOH/g, Hydroxylgehalt: 6,1 Gew.-%, Hazen-Farbzahl: 28 APHA.

**Beispiel 10: Oligoesterpolyol b6**

Herstellung eines aliphatischen Oligoesters auf Basis von Glycerin

analog Beispiel 1 wurden 2.010 g Glycerin, 2.490 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 100,0 Gew.-%, Viskosität bei 23 °C: 980 mPa·s, Säurezahl: 1,2 mg KOH/g, Hydroxylzahl: 811 mg KOH/g, Hydroxylgehalt: 24,6 Gew.-%, Hazen-Farbzahl: 23 APHA.

**Beispiele 11 bis 13:**

**Herstellvorschrift für die Copolymerisate c1 bis c3**

In einem 6-1-Edelstahldruckreaktor mit Rührer, Destillationseinrichtung, Vorlagebehälter für Monomermischung und Initiator inklusive Dosierpumpen sowie automatischer Temperaturregelung wurde Teil 1 vorgelegt und auf die gewünschte Polymerisationstemperatur aufgeheizt. Dann wurden durch separate Zuläufe gemeinsam beginnend Teil 2 (Monomermischung) in 3 Stunden und Teil 3 (Initiatorlösung) in 3,5 Stunden zudosiert, wobei die Polymerisationstemperatur konstant (± 2 °C) gehalten wurde. Anschließend wurde 60 Minuten bei der Polymerisationstemperatur nachgerührt. Dann wurde auf Raumtemperatur abgekühlt und der Festgehalt bestimmt. Die Copolymerisate sollten einen Festgehalt von 70 ± 1 % haben. Bei einem Festgehalt von ≤ 68 % wurde mit 5 % der ursprünglichen Initiatormenge bei 150 °C 30 Minuten nachaktiviert. Bei einem Festgehalt zwischen 68 und 69 % wurde auf 70 ± 1 % andestilliert. Danach wurde das Copolymerisat filtriert (Supra T5500, Porengröße 25 - 72 µm, Seitz-Filter-Werke GmbH, Bad Kreuznach, DE). Die Zusammensetzungen der Teile 1 bis 3 in Gew.-% und die Kenndaten der Produkte sind in der Tabelle 1 aufgeführt.

**Tabelle 1:**

| Copolymerisat | c1 | c2 | c3 |
|---|---|---|---|
| **Teil 1** | | | |
| Butylacetat | - | - | 25,00 |
| Solventnaphtha 100[1) ] | 25,00 | 25,00 | - |
| **Teil 2** | | | |
| Styrol | 10,79 | 11,89 | 27,44 |
| Hydroxyethylmethacrylat | 21,81 | 21,81 | 23,00 |
| Butylacrylat | 33,51 | 33,51 | 17,04 |
| Polybutadien Nisso® B 1000[2)] | 0,95 | - | - |
| Polybutadien Lithene® AL[3)] | - | 0,95 | - |
| Acrylsäure | 1,09 | - | 0,68 |
| **Teil 3** | | | |
| Di-tert.-butylperoxid | 2,84 | 2,84 | 2,84 |
| Butylacetat | - | - | 4,00 |

(fortgesetzt)

| Teil 3 | | | |
|---|---|---|---|
| Solventnaphtha 100[1] | 4,00 | 4,00 | - |
| Polymerisationstemperatur, °C | 160 | 160 | 170 |
| | | | |
| **Kenndaten** | | | |
| Festgehalt [Gew.-%] | 70,5 | 69,4 | 70,1 |
| Viskosität bei 23 °C [mPa·s] | 3.710 | 1.140 | 3.582 |
| Säurezahl, Lieferform [mg KOH/g] | 10,1 | 1,8 | 7,8 |
| OH-Zahl, Lieferform [mg KOH/g] | 91 | 93 | 97 |
| OH-Gehalt, Festharz [Gew.-%] | 3,9 | 4,1 | 4,2 |
| Hazen-Farbzahl, Lieferform [APHA] | 24 | 19 | 15 |

Alle Mengenangaben (Teile 1 bis 3) sind in Gew.-% zu verstehen.
[1] Handelsprodukt der DHC Solvent Chemie GmbH, D-45478 Mülheim an der Ruhr
[2] Handelsprodukt der Nippon Soda, Japan
[3] Handelsprodukt der Synthomer GmbH, Frankfurt/Main

**Beispiele 14 bis 21**

**Herstellung der erfindungsgemäßen Polyolkomponenten A**

Die Oligocarbonatdiole a), die Oligoesterpolyole b) und die Polyacrylatpolyole c) werden in einem 1 Liter Glaskolben unter Stickstoffatmosphäre 1 Stunde bei 60 °C gerührt. Dann werden die erhaltenen Polyolgemische auf Raumtemperatur abgekühlt, deren Kenndaten bestimmt und für die anwendungstechnischen Beispiele bereitgehalten. Die Zusammensetzungen in Gew.-% (bezogen auf Festharz) der erfindungsgemäßen Polyolkomponenten A1) bis A8) sind in Tabelle 2 und die entsprechenden Kenndaten sind in Tabelle 3 aufgeführt.

**Tabelle 2: Zusammensetzungen der erfindungsgemäßen Polyolgemische A1 bis A8 in Gew.-%, bezogen auf Festharz.**

| Polyolgemisch | A1 | A2 | A3 | A4 | A5 | A6 | A7 | A8 |
|---|---|---|---|---|---|---|---|---|
| Komponente a1 | 5 | - | - | - | - | - | - | 25 |
| Komponente a2 | - | - | - | 20 | - | 15 | - | - |
| Komponente a3 | - | - | 10 | - | 40 | - | - | - |
| Komponente a4 | - | 40 | - | - | - | - | 20 | - |
| Komponente b1 | - | - | - | 40 | - | - | 30 | - |
| Komponente b2 | - | - | - | - | - | 45 | - | - |
| Komponente b3 | - | - | - | - | 40 | - | - | - |
| Komponente b4 | 60 | - | - | - | - | - | - | 30 |
| Komponente b5 | - | - | 20 | - | - | - | - | - |
| Komponente b6 | - | 20 | - | - | - | - | - | - |
| Komponente c1 | - | 40 | - | - | - | 40 | - | 45 |
| Komponente c2 | - | - | 70 | 40 | - | - | 50 | - |
| Komponente c3 | 35 | - | - | - | 20 | - | - | - |

### Tabelle 3: Kenndaten der erfindungsgemäßen Polyolgemische A1 bis A8

|  | A1 | A2 | A3 | A4 | A5 | A6 | A7 | A8 |
|---|---|---|---|---|---|---|---|---|
| Festgehalt [Gew.-%] | 87,0 | 84,8 | 76,5 | 84,4 | 92,8 | 85,7 | 81,5 | 84,7 |
| Viskosität bei 23 °C [mPa·s] | 2.280 | 7.520 | 1.050 | 1.900 | 1.870 | 3.480 | 2.580 | 6.080 |
| Säurezahl [mg KOH/g] | 4,0 | 5,1 | 2,4 | 1,8 | 2,2 | 5,3 | 1,7 | 5,8 |
| OH-Zahl [mg KOH/g] | 228 | 266 | 112 | 377 | 268 | 359 | 306 | 151 |
| OH-Gehalt Festharz [%] | 7,9 | 9,5 | 4,4 | 13,5 | 8,7 | 12,7 | 11,4 | 5,4 |

**Anwendungstechnische Beispiele:**

**Beispiel 22:**

Zubereitung des Stammlackes (Komponente 22A)

Zu 120,0 g Polyol A3 wurden 1,4 g Baysilone® OL 17 (10 %-ige Lösung in MPA; Borchers GmbH, Langenfeld), 2,8 g Tinuvin® 292 (50 %ige Lösung in MPA, Ciba Spezialitätenchemie Lampertheim GmbH, Lampertheim), 4,2 g Tinuvin® 382/4 (50 %ige Lösung in MPA, Ciba Spezialitätenchemie Lampertheim GmbH, Lampertheim), 1,4 g Modaflow® (1 %-ige Lösung in MPA; Brenntag AG, Mülheim/R), 34,8 g einer 1: 1 Mischung aus 1-Methoxypropylacetat-2 und Solventnaphtha 100 gegeben und innig verrührt.

Zubereitung der Härterlösung (Komponente 22B)

Zu 43,4 g Desmodur® N 3600 wurden 23,4 g einer 1: 1 Mischung aus 1-Methoxypropylacetat-2 und Solventnaphtha 100 gegeben und innig verrührt.

**Beispiele 23 - 25 und Vergleichsbeispiele V1 und V2:**

Gleiches Vorgehen wie in Beispiel 22A bzw. 22B. Es wurden jedoch die in Tabelle 4 und Tabelle 5 aufgeführten Rohstoffe eingesetzt.

### Tabelle 4:

| Stammlack | 23 A | 24 A | 25 A |
|---|---|---|---|
| Polyol | A4 | A5 | A8 |
| Einwaage [g] | 100,0 | 100,0 | 100,0 |
| Baysilone® OL 17 (10% MPA) [g] | 1,28 | 1,41 | 1,29 |
| Tinuvin® 292 (50% MPA) [g] | 2,57 | 2,83 | 2,58 |
| Tinuvin® 382/4 (50% MPA) [g] | 3,85 | 4,24 | 3,87 |
| Modaflow® (1% MPA) [g] | 1,28 | 1,41 | 1,29 |
| 1-Methoxypropylacetat-2 / Solventnaphtha 100 (1:1) [g] | 42,31 | 56,47 | 42,81 |
| Härter | 23B | 24B | 25B |
| Desmodur® N 3600 [g] | 122,35 | - | - |
| Desmodur® N 3390 BA [g] | - | 101,77 | 57,65 |
| 1-Methoxypropylacetat-2/Solventnaphtha 100 (1:1) [g] | 76,52 | 45,34 | 23,78 |

### Tabelle 5:

| Vergleichsbeispiel | V1 | V2 |
|---|---|---|
| **Stammlack (A)**<br>Desmophen® A 870 [g] | 64,6 | 86,9 |

(fortgesetzt)

| Vergleichsbeispiel | V1 | V2 |
|---|---|---|
| **Stammlack (A)** | | |
| Desmophen® VP LS 2971 [g] | 18,9 | -- |
| Baysilone® OL 17 (10% Xylol) [g] | 0,9 | 0,9 |
| Tinuvin® 292 (10% Xylol) [g] | 9,1 | 9,1 |
| Tinuvin® 1130 (10% Xylol) [g] | 18,1 | 18,1 |
| Modaflow® (1% Xylol) [g] | 0,9 | 0,9 |
| 1-Methoxypropylacetat-2 / Solventnaphtha 100 (1:1) [g] | 11,9 | 8,7 |
| Butylglycolacetat [g] | --- | 3,6 |
| **Härter (B)** | | |
| Desmodur® N 3390 BA [g] | 33,8 | 33,1 |
| 1-Methoxypropylacetat-2 / Solventnaphtha 100 (1:1) [g] | 11,9 | 8,6 |

Vermischung des Stammlackes mit dem Härter und Applikation des Lackes:

Die oben aufgeführten Komponenten A (Stammlack) und B (Härter) wurden jeweils zusammengemischt und innig verrührt. Anschließend wurden die Mischungen jeweils mit einer Luftpistole auf mit schwarzem Basislack vorbeschichtete Coil Coat Bleche appliziert, 10 min bei Raumtemperatur abgelüftet und anschließend 30 min. bei 140°C im Umluftofen eingebrannt. Es wurden brillante, hochglänzende Beschichtungen mit einer Trockenfilmschichtdicke von ca. 40 $\mu$m erhalten. Eine Übersicht über die ermittelten lacktechnischen Eigenschaften der Beschichtungen ist in Tabelle 6 dargestellt.

**Tabelle 6: Lacktechnische Eigenschaften von Beschichtungen**

| Beispiel | 22 | 23 | 24 | 25 | Vergleich 1 | Vergleich 2 |
|---|---|---|---|---|---|---|
| Pendelhärte (s) auf Glas | 183 | 175 | 169 | 178 | 182 | 197 |
| FAM/Xylol, 10 min | 2/2 | 2/2 | 2/2 | 2/2 | 2/2 | 2/2 |
| Haze | 10 | 9 | 9 | 10 | 11 | 10 |
| Kratzfestigkeit | | | | | | |
| Glanz vorher (20°) | 88 | 86 | 89 | 88 | 91 | 92 |
| Glanz nach 10 Zyklen (20°) | 78 | 83 | 74 | 80 | 58 | 52 |
| Rel. Restglanz (%) | 89 | 96 | 83 | 91 | 63 | 56 |
| Glanz nach 2h 60 °C Reflow | 82 | 84 | 81 | 83 | 75 | 76 |
| Rel. Restglanz n. Reflow (%) | 93 | 98 | 91 | 94 | 82 | 82 |
| **Chemikalienbeständigkeit** | | | | | | |
| Baumharz | 36 | 38 | 38 | 38 | 36 | 38 |
| Pankreatin | 36 | 36 | 36 | 36 | 36 | 36 |
| VE-Wasser | 43 | 46 | 45 | 44 | 40 | 44 |
| NaOH, 1% | 42 | 46 | 44 | 42 | 42 | 42 |
| $H_2SO_4$, 1% | 43 | 44 | 45 | 43 | 41 | 45 |

**<u>Prüfmethoden:</u>**

**Pendelhärte:**

Die Pendelhärte wurde gemäß der DIN EN ISO 1522 bestimmt.

**Beständigkeit gegen Benzin:**

Prüfung mit FAM-Prüfkraftstoff nach DIN 51 635, in Anlehnung an VDA 621-412 (Prüfung A 4.1.1 Y und 4.1.3 Y) und Xylol; Belastungsdauer 10 min.

**Kratzfestigkeit:**

Die Kratzfestigkeit wurde gemäß der DIN 55668 - Methode zur "Prüfung der Kratzfestigkeit von Beschichtungen mit einer Laborwaschanlage" bestimmt. Messung des Glanzgrades als Reflektometerwert gemäß DIN 67 530 vor und nach der Beanspruchung durch 10 Doppelhübe sowie nochmals nach 2 h Lagerung bei 60 °C (Reflow-Verhalten).

**Chemikalienbeständigkeit:**

Die Chemikalienbeständigkeit wurde gemäß DIN EN ISO 2812/5 (Entwurf) im Gradientenofen ermittelt.
Die erfindungsgemäßen Beschichtungen gemäß Beispiel 22 bis 25 weisen eine bessere Kratzbeständigkeit - sowohl vor als auch nach Reflow - auf als die Vergleichsbeispiele 1 und 2. Die Chemikalienbeständigkeit der erfindungsgemäßen Beschichtungen ist dabei in Summe ebenfalls besser als die der beiden Vergleichsbeispiele.

**Patentansprüche**

1. Beschichtungsmittel, enthaltend

   A) eine Polyolkomponente, die aus

      a) 5 bis 40 Gew.-% an aliphatischen Oligocarbonatpolyolen mit einem zahlenmittleren Molekulargewicht $M_n$ von 200 bis 5.000 g/mol
      b) 20 bis 60 Gew.-% an Oligoesterpolyolen mit einem zahlenmittleren Molekulargewicht von 200 bis 5.000 g/mol und
      c) 20 bis 70 Gew.-% an hydroxyfunktionellen Polyacrylatpolyolen besteht und

   B) ein oder mehrere gegenüber OH-Gruppen reaktive Polyisocyanatvernetzer mit einer mittleren NCO-Funktionalität von ≥ 2,0.

2. Beschichtungsmittel gemäß Anspruch 1, **dadurch gekennzeichnet, dass** die Menge der Komponente a) 10 bis 35 Gew.-%, die Menge der Komponente b) 25 bis 55 Gew.-% und die Menge der Komponente c) 25 bis 65 Gew.-% beträgt.

3. Beschichtungsmittel gemäß Anspruch 1 oder 2, **dadurch gekennzeichnet, dass** in a) aliphatische Oligocarbonatdiole mit einem Molekulargewicht von 200 bis 2.000 g/mol basierend auf 1,4-Butandiol, 1-6-Hexandiol, 3-Methyl-1,5-Pentandiol, Cyclohexan-1,4-dimethanol, Trimethylolpropan, Glycerin oder deren Mischungen eingesetzt werden.

4. Beschichtungsmittel gemäß Anspruch 1 oder 2, **dadurch gekennzeichnet, dass** in b) aliphatische Oligoesterpolyole mit einem Molekulargewicht von 200 bis 2.000 g/mol basierend auf ε-Caprolacton und 1,4-Butandiol, 1,6-Hexandiol, 3-Methyl-1,5-Pentandiol, Cyclohexan-1,4-dimethanol, Trimethylolpropan, Glycerin, Pentaerythrit oder deren Mischungen dieser Alkohole eingesetzt werden.

5. Beschichtungsmittel gemäß einem der Ansprüche 1 bis 4, **dadurch gekennzeichnet, dass** in c) Copolymerisate aus

   c1) 0,4 bis 5 Gew.-% eines oder mehrerer, gegebenenfalls funktioneller, Polybutadiene mit einem zahlenmittleren Molekulargewicht von 750 bis 3.500 g/mol und mit einem Anteil an 1,2-seitenständigen vinylischen Doppelbindungen von mindestens 40 Mol.-% bezogen auf alle enthaltenen vinylischen Doppelbindungen des Polybutadiens,
   c2) 5 bis 20 Gew.-% Styrol,
   c3) 30 bis 60 Gew.-% Hydroxyethylacrylat, Hydroxyethylmethacrylat oder deren Mischungen,
   c4) 0 bis 15 Gew.-% einer oder mehrerer Verbindungen der Gruppe bestehend aus Isobornylacrylat, Isobornylmethacrylat, Cyclohexyl(meth)acrylat, 3,5,5-Trimethyl-cyclohexyl(meth)acrylat und 4-tert.-Butylcyclohexyl (meth)acrylat,
   c5) 25 bis 45 Gew.-% eines oder mehrerer Esters aus Acryl- oder Methacrylsäure und aliphatischen C1 bis C4 Monoalkoholen,
   c6) 0,3 bis 2 Gew.-% Acrylsäure, Methacrylsäure oder deren Mischungen und
   c7) 0 bis 15 Gew.-% einer oder mehrerer der Verbindungen der Gruppe bestehend aus Hydroxypropyl(meth)acrylat, Vinylester aliphatischer, gegebenenfalls verzweigter C1 bis C9 Monocarbonsäuren, Dialkyl- oder Di(cyclo)alkylester aus Malein- oder Fumarsäure und C3 bis C6 Monoalkoholen,

eingesetzt werden.

6. Beschichtungsmittel gemäß einem der Ansprüche 1 bis 5, **dadurch gekennzeichnet, dass** die in c) eingesetzten Copolymere eine Uneinheitlichkeit (Mw/Mn) ≤ 2,5 aufweisen.

7. Beschichtungsmittel gemäß einem der Ansprüche 1 bis 6, **dadurch gekennzeichnet, dass** die Polyolkomponente A) durch Polymerisation der entsprechenden Monomere des Copolymerisats c) in Gegenwart der aliphatischen Oligocarbonatpolyolen a) und/oder der aliphatischen Oligoesterpolyvle b) hergestellt wird.

8. Beschichtungsmittel gemäß einem der Ansprüche 1 bis 7, **dadurch gekennzeichnet, dass** in B) Polyisocyanate bzw. Polyisocyanatgemische mit Isocyanuratstruktur auf Basis von HDI, IPDI und/oder 4,4'-Diisocyanatodicyclohexylmethan eingesetzt werden.

9. Beschichtungsmittel gemäß einem der Ansprüche 1 bis 8, **dadurch gekennzeichnet, dass** das NCO/OH-Verhältnis der freien und gegebenenfalls blockierten NCO-Gruppen zu den isocyanatreaktiven Gruppen 0,5 bis 1,2 ist.

10. Beschichtungen, erhältlich unter Verwendung der Beschichtungsmittel gemäß einem der Ansprüche 1 bis 9.

11. Substrate, beschichtet mit Beschichtungen gemäß Anspruch 10.

## Claims

1. Coating composition containing

   A) a polyol component which consists of

   a) from 5 to 40% by weight of aliphatic oligocarbonate polyols having a number average molecular weight $M_n$ of from 200 to 5000 g/mol,
   b) from 20 to 60% by weight of oligoester polyols having a number average molecular weight of from 200 to 5000 g/mol and
   c) from 20 to 70% by weight of hydroxyfunctional polyacrylate polyols
   and

   B) one or more polyisocyanate crosslinkers which are reactive towards OH groups and have an average NCO functionality of ≥ 2.0.

2. Coating composition according to Claim 1, **characterized in that** the amount of component a) is from 10 to 35% by weight, the amount of component b) is from 25 to 55% by weight and the amount of component c) is from 25 to 65% by weight.

3. Coating composition according to Claim 1 or 2, **characterized in that** aliphatic oligocarbonate diols which have a molecular weight of from 200 to 2000 g/mol and are based on 1,4-butanediol, 1,6-hexanediol, 3-methyl-1,5-pentanediol, cyclohexane-1,4-dimethanol, trimethylolpropane, glycerol or mixtures thereof are used in a).

4. Coating composition according to Claim 1 or 2, **characterized in that** aliphatic oligoester polyols which have a molecular weight of from 200 to 2000 g/mol and are based on ε-caprolactone and 1,4-butanediol, 1,6-hexanediol, 3-methyl-1,5-pentanediol, cyclohexane-1,4-dimethanol, trimethylolpropane, glycerol, pentaerythritol or mixtures of these alcohols are used in b).

5. Coating composition according to any of Claims 1 to 4, **characterized in that** copolymers of

   c1) from 0.4 to 5% by weight of one or more, optionally functional, polybutadienes having a number average molecular weight of from 750 to 3500 g/mol and a proportion of 1,2-lateral vinylic double bonds of at least 40 mol% based on all vinylic double bonds present in the polybutadiene,

c2) from 5 to 20% by weight of styrene,

c3) from 30 to 60% by weight of hydroxyethyl acrylate, hydroxyethyl methacrylate or mixtures thereof,

c4) from 0 to 15% by weight of one or more compounds of the group consisting of isobornyl acrylate, isobornyl methacrylate, cyclohexyl (meth)acrylate, 3,5,5-trimethylcyclohexyl (meth)acrylate and 4-tert-butylcyclohexyl (meth)acrylate,

c5) from 25 to 45% by weight of one or more esters of acrylic or methacrylic acid and aliphatic C1-C4-monoalcohols,

c6) from 0.3 to 2% by weight of acrylic acid, methacrylic acid or mixtures thereof and

c7) from 0 to 15% by weight of one or more compounds of the group consisting of hydroxypropyl (meth)acrylate, vinyl esters of aliphatic, optionally branched C1-C9-monocarboxylic acids, dialkyl or di(cyclo)alkyl esters of maleic or fumaric acid and C3-C6-monoalcohols

are used in c).

6. Coating composition according to any of Claims 1 to 5, **characterized in that** the copolymers used in c) have a polydispersity (Mw/Mn) of ≤ 2.5.

7. Coating composition according to any of Claims 1 to 6, **characterized in that** the polyol component A) is prepared by polymerization of the corresponding monomers of the copolymer c) in the presence of the aliphatic oligocarbonate polyols a) and/or the aliphatic oligoester polyols b).

8. Coating composition according to any of Claims 1 to 7, **characterized in that** polyisocyanates or polyisocyanate mixtures which have isocyanurate structures and are based on HDI, IPDI and/or 4,4'-diisocyanatodicyclohexlymethane are used in B).

9. Coating composition according to any of Claims 1 to 8, **characterized in that** the NCO/OH ratio of the free and optionally blocked NCO groups to the isocyanate-reactive groups is from 0.5 to 1.2.

10. Coatings which can be obtained using the coating composition according to any of Claims 1 to 9.

11. Substrates coated with coatings according to Claim 10.

**Revendications**

1. Agent de revêtement, contenant

   A) un composant polyol, constitué par

      a) 5 à 40% en poids d'oligocarbonate-polyols aliphatiques présentant un poids moléculaire numérique moyen $M_n$ de 200 à 5000 g/mole
      b) 20 à 60% en poids d'oligoester-polyols présentant un poids moléculaire numérique moyen de 200 à 5000 g/mole et
      c) 20 à 70% en poids de polyacrylate-polyols à fonction hydroxy
      et

   B) un ou plusieurs réticulants à fonction polyisocyanate réactifs vis-à-vis des groupes OH présentant une fonctionnalité NCO moyenne ≥ 2,0.

2. Agent de revêtement aqueux selon la revendication 1, **caractérisé en ce que** la quantité de composant a) est de 10 à 35% en poids, la quantité de composant b) est de 25 à 55% en poids et la quantité de composant c) est de 25 à 65% en poids.

3. Agent de revêtement selon la revendication 1 ou 2, **caractérisé en ce qu'**on utilise dans a) des oligocarbonatediols aliphatiques présentant un poids moléculaire de 200 à 2000 g/mole à base de 1,4-butanediol, de 1,6-hexanediol, de 3-méthyl-1,5-pentanediol, de cyclohexane-1,4-diméthanol, de triméthylolpropane, de glycérol ou de leurs mélanges.

**4.** Agent de revêtement selon la revendication 1 ou 2, **caractérisé en ce qu'**on utilise dans b) des oligoesters-polyols présentant un poids moléculaire de 200 à 2000 g/mole à base de $\varepsilon$-caprolactone et de 1,4-butanediol, de 1,6-hexanediol, de 3-méthyl-1,5-pentanediol, de cyclohexane-1,4-diméthanol, de triméthylolpropane, de glycérol, de pentaérythritol ou des mélanges de ces alcools.

**5.** Agent de revêtement selon l'une quelconque des revendications 1 à 4, **caractérisé en ce qu'**on utilise dans c) des copolymères constitués par

c1) 0,4 à 5% en poids d'un ou de plusieurs polybutadiènes le cas échéant fonctionnels, présentant un poids moléculaire numérique moyen de 750 à 3500 g/mole et une proportion de doubles liaisons vinyliques en position 1,2 d'au moins 40% en mole par rapport à toutes les doubles liaisons vinyliques contenues du polybutadiène,
c2) 5 à 20% en poids de styrène,
c3) 30 à 60% en poids d'acrylate d'hydroxyéthyle, de méthacrylate d'hydroxyéthyle ou de leurs mélanges,
c4) 0 à 15% en poids d'un ou de plusieurs composés du groupe constitué par l'acrylate d'isobornyle, le méthacrylate d'isobornyle, le (méth)acrylate de cyclohexyle, le (méth)acrylate de 3,5,5-triméthylcyclohexyle et le (méth)acrylate de 4-tert-butylcyclohexyle,
c5) 25 à 45% en poids d'un ou de plusieurs esters de l'acide acrylique ou méthacrylique et de monoalcools aliphatiques en $C_1$ à $C_4$,
c6) 0,3 à 2% en poids d'acide acrylique, d'acide méthacrylique ou de leurs mélanges et
c7) 0 à 15% en poids d'un ou de plusieurs composés du groupe constitué par le (méth)acrylate d'hydroxypropyle, les esters de vinyle d'acides monocarboxyliques aliphatiques, le cas échéant ramifiés, en $C_1$ à $C_9$, les esters dialkyliques ou di(cyclo)alkyliques de l'acide maléique ou fumarique et de monoalcools en $C_3$ à $C_6$,

**6.** Agent de revêtement selon l'une quelconque des revendications 1 à 5, **caractérisé en ce que** les copolymères utilisés dans c) présentent une hétérogénéité $(M_w/M_n) \leq 2,5$.

**7.** Agent de revêtement selon l'une quelconque des revendications 1 à 6, **caractérisé en ce que** le composant polyol A) est préparé par polymérisation des monomères correspondants du copolymère c) en présence des oligocarbonate-polyols aliphatiques a) et/ou des oligo-esterpolyols aliphatiques b).

**8.** Agent de revêtement selon l'une quelconque des revendications 1 à 7, **caractérisé en ce qu'**on utilise, dans B), des polyisocyanates ou des mélanges de polyisocyanate présentant une structure isocyanurate à base de HDI, d'IPDI et/ou de 4,4'-diisocyanatodicyclohexylméthane.

**9.** Agent de revêtement selon l'une quelconque des revendications 1 à 8, **caractérisé en ce que** le rapport NCO/OH des groupes NCO libres et le cas échéant bloqués aux groupes réactifs vis-à-vis d'isocyanate vaut 0,5 à 1,2.

**10.** Revêtements, pouvant être obtenus par l'utilisation des agents de revêtement selon l'une quelconque des revendications 1 à 9.

**11.** Substrats, revêtus par des revêtements selon la revendication 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19824118 A
- WO 9620968 A
- EP 0896991 A
- EP 1101780 A
- EP 819710 A
- EP 778298 A
- EP 1479704 A
- EP 1404740 A
- EP 1477508 A
- EP A1477508 A1
- DE 1670666 A

- DE 1954093 A
- DE 2414413 A
- DE 2452532 A
- DE 2641380 A
- DE 3700209 A
- DE 3900053 A
- DE 3928503 A
- EP 336205 A
- EP 339396 A
- EP 798299 A

**In der Beschreibung aufgeführte Nicht-Patentliteratur**

- Lösemittel- und Chemikalienbeständigkeit, insbesondere die Säurebeständigkeit. Carl Hanser Verlag, 2000, vol. 54, 60-64
- Methods of Organic Chemistry. Thieme, 1987, 1156

- *J. Prakt. Chem.,* 1994, vol. 336, 185-200
- **HOUBEN WEYL.** *Methoden der organischen Chemie,* vol. XIV/2, 61-70